# EUROPEAN PATENT SPECIFICATION

(11) **EP 3 163 924 B1**
(45) Date of publication and mention of the grant of the patent: **17.03.2021**
(21) Application number: 16175735.6
(22) Date of filing: 22.06.2016
(51) Int. Cl.: H04W 12/04, H04W 84/12, H04B 7/155, H04L 29/06, H04W 12/00, H04W 76/11, B64C 39/02

(54) **METHOD, DEVICE AND SYSTEM FOR ESTABLISHING WIRELESS NETWORK CONNECTION**
VERFAHREN, VORRICHTUNG UND SYSTEM ZUR HERSTELLUNG EINER DRAHTLOSNETZWERKVERBINDUNG
PROCÉDÉ, DISPOSITIF ET SYSTÈME POUR ÉTABLIR UNE CONNEXION DE RÉSEAU SANS FIL

(30) Priority: 30.10.2015 CN 201510729467
(43) Date of publication of application: 03.05.2017
(73) Proprietor: Xiaomi Inc., Beijing 100085 (CN)
(72) Inventor: YE, Hualin, 100085 Beijing (CN); LIU, Xin, 100085 Beijing (CN); XIA, Yongfeng, 100085 Beijing (CN)
(74) Representative: Cabinet Beau de Loménie

(56) References cited:
- WO-A2-2012/130790
- CN-A- 103 987 033
- US-A1- 2006 251 256
- US-B1- 8 756 439
- Dji.Com ET AL: "Phantom 2 Vision+ User Manual V1.6", , 30 April 2014 (2014-04-30), XP055348548, Retrieved from the Internet: URL:http://download.dji-innovations.com/do wnloads/phantom_2_vision_plus/en/Phantom_2 _Vision_Plus_User_Manual_v1.6_en.pdf [retrieved on 2017-02-22]

## Description

### TECHNICAL FIELD

The present disclosure generally relates to the field of communications technology, and more particularly, to a method, a device and a system for establishing a wireless network connection.

### BACKGROUND

A consumer grade unmanned aerial vehicle (hereinafter referred to as "unmanned aerial vehicle") means an unmanned aerial vehicle suitable for ordinary consumers to operate, easy to start, and mainly used for flight and entertainment.

Some types of unmanned aerial vehicles have a function to transmit pictures and videos captured in real time during flight to a smartphone of a user. A wireless network connection is established between the unmanned aerial vehicle and the smartphone by Wi-Fi (Wireless-Fidelity) technology, and the unmanned aerial vehicle transmits the collected image signals back to the smartphone through the wireless network connection. In order to extend the communication distance between the unmanned aerial vehicle and the smartphone, a repeater is used to forward data transmitted between the unmanned aerial vehicle and the smartphone. The repeater may serve as a wireless AP (Access Point), and the unmanned aerial vehicle and the smartphone are respectively connected with the repeater. The unmanned aerial vehicle sends the image signals to the repeater and the repeater forwards the image signals to the smartphone. In order to improve data security, the repeater serving as the wireless AP has access authentication messages such as a SSID (Service Set Identifier) and a password and the like. The unmanned aerial vehicle needs to provide the above access authentication messages to the repeater before establishing a wireless network connection with the repeater, and the connection may be successfully established only when the authentication is passed.

Because the unmanned aerial vehicle generally does not have a human-computer interaction interface, the user cannot directly operate the unmanned aerial vehicle to provide the network configuration parameter of the repeater (for example, the access authentication messages such as a SSID and a password) to the unmanned aerial vehicle. In the related art, the unmanned aerial vehicle establishes a wired connection with a PC (Personal Computer) through a cable. The user provides the network configuration parameter of the repeater to the unmanned aerial vehicle through the PC, such that the unmanned aerial vehicle establishes a wireless network connection with the repeater through the network configuration parameter. However, the way provided by the above related art provides the network configuration parameter of the repeater to the unmanned aerial vehicle with the help of a PC, therefore all the operations need to be accomplished manually by the user, the operation is inconvenient, and the efficiency is relatively low.

US2006/251526 describes a system in which a guest device entering a wireless network including an access point can receive a key from the access point via an introducer device.

Dji.Com et al "Phantom 2 Vision+ User Manual V1.6" describes an aerial unmanned vehicle which can be operated with a range extender that allows the communication range to be extended between the vehicle and a smartphone.

WO2012/130790 describes a system in which an aerial unmanned vehicle can communicate with a control unit via radio communications and can receive an encryption key (for subsequent radio communication) by being plugged into a base unit.

CN 103 987 033 describes a system in which an intelligent terminal transmits a network SSID to an aerial unmanned vehicle via a sound wave.

### SUMMARY

In order to solve the problem existing in the related art, the embodiments of the present disclosure provide a method, and a system for establishing a wireless network connection between a repeater and target equipment, including the following technical solutions.

According to a first aspect of embodiments of the present disclosure, there is provided a method according to appended claim 1.

For example, the target equipment may be external equipment of an unmanned aerial vehicle;
the external equipment is connected with a control component of the unmanned aerial vehicle through a data bus;
the first communication link is established between the control component and the mobile terminal; and
a second wireless network connection is further established between the repeater and the mobile terminal, and the first wireless network connection and the second wireless network connection form a second communication link between the external equipment and the mobile terminal.

According to a second aspect of embodiments of the present disclosure, there is provided a system according to appended claim 2.

For example, the mobile terminal of the system may further include: a detecting module and a prompting module, wherein
the detecting module is configured to detect whether the first communication link is available;
the sending module is configured to, if the first communication link is available, send the network configuration parameter to target equipment through a first communication link established between the mobile terminal and the target equipment; and
the prompting module is configured to, if the first communication link is not available, generate a prompting message configured to prompt a user to repair the first communication link.

For example, the detecting module may be configured to:
detect whether the first communication sublink is available;
and/or,
receive an indicating message from the remote controller through the first communication sublink, wherein the indicating message is configured to indicate whether the second communication sublink is available.

For example, the target equipment may be external equipment of an unmanned aerial vehicle;
the external equipment is connected with a control component of the unmanned aerial vehicle through a data bus;
the first communication link is established between the control component and the mobile terminal; and
a second wireless network connection is further established between the repeater and the mobile terminal, and the first wireless network connection and the second wireless network connection form a second communication link between the external equipment and the mobile terminal.

For example, the external equipment may include: an image collecting component and/or a flight parameter detecting component.

The target equipment may include:
a receiving module configured to receive a network configuration parameter of the repeater sent by the mobile terminal through the first communication link established between the target equipment and the mobile terminal; and
a connecting module configured to establish the first wireless network connection with the repeater by using the network configuration parameter.

For example, the connecting module may include: a request generating sub-module and a request broadcasting sub-module;
the request generating sub-module is configured to generate a connection establishing request carrying with the network configuration parameter; and
the request broadcasting sub-module is configured to broadcast the connection establishing request, such that after acquiring the connection establishing request, the repeater establishes the first wireless connection with the target equipment when it is detected that the network configuration parameter is correct.

The repeater of the system may include:
a request acquiring module configured to acquire a connection establishing request sent by the target equipment, wherein the connection establishing request carries a network configuration parameter of the repeater, received from the mobile terminal through the first communication link established between the target equipment and the mobile terminal;
a parameter detecting module configured to detect whether the network configuration parameter is correct; and
a connection establishing module configured to, if the network configuration parameter is correct, establish the first wireless network connection with the target equipment.

For example, the repeater of the system may further include:
a parameter receiving module configured to receive the network configuration parameter of the repeater automatically generated by the mobile terminal from the mobile terminal through a second wireless network connection established between the repeater and the mobile terminal; or,
a parameter generating module configured to automatically generate the network configuration parameter of the repeater.

The technical scheme according to embodiments of the present disclosure may have the following beneficial effects.

The mobile terminal acquires a network configuration parameter of a repeater and then sends the network configuration parameter to target equipment through a first communication link established between the mobile terminal and the target equipment, the first communication link comprising: a first communication sublink between the mobile terminal and a remote controller, and a second communication sublink between the remote controller and the target equipment, such that the target equipment establishes a first wireless network connection with the repeater by using the network configuration parameter. It solves the problem that the related art provides the network configuration parameter of the repeater to the unmanned aerial vehicle with the help of a PC, all the operations need to be accomplished manually by the user, the operation is inconvenient, and the efficiency is relatively low. The present disclosure achieves providing the network configuration parameter by using the existing first communication link between the mobile terminal and the target equipment, and the whole process is accomplished without user intervention, thus achieving the technical effect of simplifying the operation and improving the efficiency.

It is to be understood that both the foregoing general description and the following detailed description are illustrative and explanatory only and are not restrictive of the invention, as claimed.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a schematic diagram of an implementing environment according to an example embodiment;
Fig. 2 is a flow chart illustrating a component part of a method for establishing a wireless network connection according to an example embodiment;
Fig. 3 is a flow chart illustrating another component part of the method for establishing a wireless network connection according to an example embodiment;
Fig. 4 is a flow chart illustrating yet another component part of the method for establishing a wireless network connection according to an example embodiment;
Fig. 5 is a flow chart illustrating still another component part of the method for establishing a wireless network connection according to an example embodiment;
Fig. 6 is a flow chart illustrating a method for establishing a wireless network connection according to an example embodiment;
Fig. 7A is a block diagram of a device used in a system for establishing a wireless network connection according to an example embodiment;
Fig. 7B is a block diagram of another device used in a system for establishing a wireless network connection according to another example embodiment;
Fig. 8A is a block diagram of yet another device used in a system for establishing a wireless network connection according to another example embodiment;
Fig. 8B is a block diagram of a connecting module 802 according to another example embodiment;
Fig. 9A is a block diagram of still another device used in a system for establishing a wireless network connection according to another example embodiment;
Fig. 9B is a block diagram of yet another device used in a system for establishing a wireless network connection according to another example embodiment;
Fig. 9C is a block diagram of still another device used in a system for establishing a wireless network connection according to another example embodiment;
Fig. 10 is a block diagram of yet another device used in a system for establishing a wireless network connection according to another example embodiment;
Fig. 11 is a block diagram of a system for establishing a wireless network connection according to an example embodiment; and
Fig. 12 is a block diagram of a device according to an example embodiment.

### DETAILED DESCRIPTION

Reference will now be made in detail to certain embodiments, examples of which are illustrated in the accompanying drawings. The following description refers to the accompanying drawings in which the same numbers in different drawings represent the same or similar elements unless otherwise represented. The implementations set forth in the following description of example embodiments do not represent all implementations consistent with the invention. Instead, they are merely examples of apparatuses and methods consistent with aspects related to the invention as recited in the appended claims.

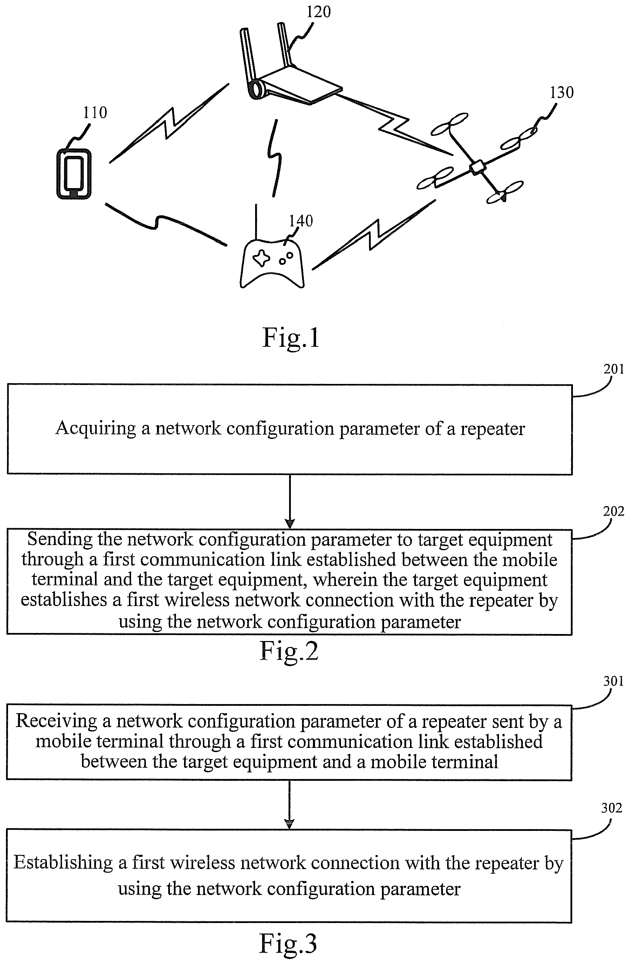

Fig. 1 is a schematic diagram of an implementing environment according to an example embodiment. The implementing environment includes: a mobile terminal 110, a repeater 120 and target equipment 130.

The mobile terminal 110 may be electronic equipment such as a smartphone, a tablet computer and multimedia playing equipment and the like. In one possible implementation, the mobile terminal 110 is installed with a target client, which is configured to receive and display the data transmitted back by the target equipment 130. For example, when the target equipment 130 is an unmanned aerial vehicle equipped with a camera and having an image collecting function, the target client is configured to receive and display the images (photos and/or videos) transmitted back by the target equipment 130.

The repeater 120 is mainly configured to extend the communication distance between the mobile terminal 110 and the target equipment 130. In one possible implementation, the repeater 120 serves as a wireless AP, for the mobile terminal 110 and the target equipment 130 to be accessed. Correspondingly, a first wireless network connection may be established between the target equipment 130 and the repeater 120, and a second wireless network connection may be established between the mobile terminal 110 and the repeater 120. Usually, the first wireless network connection and the second wireless network connection is Wi-Fi network connection. Certainly, the first wireless network connection and the second wireless network connection may also be other types of wireless network connection, for example an LTE (Long Term Evolution) network, a WiMax (Worldwide Interoperability for Microwave Access) network and the like, which is not limited in embodiments of the present disclosure.

The target equipment 130 may be remote control equipment such as an unmanned aerial vehicle, a remote control car, a remote control ship and the like. The target equipment 130 may transmit the data collected during its operation back to the mobile terminal 110 through the above first wireless network connection and the second wireless network connection. For example, when the target equipment 130 is an unmanned aerial vehicle having an image collecting function, the target equipment 130 collects images (photos and/or videos), by a camera, during flight, sends the collected images to the repeater 120 through the first wireless network connection, and the repeater 120 forwards the above images to the mobile terminal 110 through the second wireless network connection.

For example, as shown in Fig. 1, the implementing environment may further include: a remote controller 140.

The remote controller 140 is configured to remotely control the target equipment 130. For example, the remote controller 140 remotely controls the target equipment 130 via a radio signal. For example, a first communication link may be established between the mobile terminal 110 and the target equipment 130. The first communication link includes: a first communication sublink between the mobile terminal 110 and the remote controller 140, and a second communication sublink between the remote controller 140 and the target equipment 130. The mobile terminal 110 sends the network configuration parameter of the repeater 120 to the remote controller 140 through the first communication sublink established between the mobile terminal 110 and the remote controller 140, such that the remote controller 140 can send the network configuration parameter of the repeater 120 to the target equipment 130 through the second communication sublink. Further, the target equipment 130 establishes the wireless network connection with the repeater 120 by using the network configuration parameter of the repeater 120 after receiving the network configuration parameter.

In one possible implementation, the target equipment 130 is external equipment of an unmanned aerial vehicle. The external equipment of the unmanned aerial vehicle is connected with a control component of the unmanned aerial vehicle through a data bus. The control component of the unmanned aerial vehicle is configured to control the operation of the unmanned aerial vehicle. For example, the control component of the unmanned aerial vehicle establishes the above second communication sublink with the remote controller 140, receives the radio signal from the remote controller 140 and controls the operation of the unmanned aerial vehicle, for example, controls the flight of the unmanned aerial vehicle. In the embodiment of the present disclosure, the control component of the unmanned aerial vehicle establishes the first communication sublink with the mobile terminal 110, and receives the network configuration parameter of the repeater 120 from the mobile terminal 110 through the first communication link. Thereafter, the control component of the unmanned aerial vehicle provides the network configuration parameter of the repeater 120 to the external equipment of the unmanned aerial vehicle via the data bus, such that the external equipment of the unmanned aerial vehicle establishes the first wireless network connection with the repeater 120 by using the network configuration parameter of the repeater 120. For example, the external equipment of the unmanned aerial vehicle includes an image collecting component and/or a flight parameter detecting component. Wherein the image collecting component may include a camera, which is configured to collect the images (photos and/or videos) during the flight of the unmanned aerial vehicle and transmit the collected images back to the mobile terminal 110. The flight parameter detecting component may include sensors which are configured to detect and collect respective flight parameters, configured to detect and collect flight parameters (for example the flight parameters, such as speed, height and pressure and the like) during the flight of the unmanned aerial vehicle and transmit the flight parameters back to the mobile terminal 110.

Furthermore, the repeater 120 may be separate equipment; alternatively, the repeater 120 may be integrated in the remote controller 140.

Certain technical solutions provided by the present disclosure will be introduced and illustrated by several embodiments in the following.

Fig. 2 is a flow chart illustrating a component part of a method for establishing a wireless network connection according to an example embodiment. This component part of the method may be applied in the mobile terminal 110 in the implementing environment as shown in Fig. 1. This component part of the method may include the following several steps.

In step 201, a network configuration parameter of a repeater is acquired.

In step 202, the network configuration parameter is sent to target equipment through a first communication link established between the mobile terminal and the target equipment, wherein the target equipment establishes a first wireless network connection with the repeater by using the network configuration parameter.

Consequently, in the method provided by the present embodiment, the mobile terminal acquires a network configuration parameter of a repeater and then sends the network configuration parameter to target equipment through a first communication link established between the mobile terminal and the target equipment, such that the target equipment establishes a first wireless network connection with the repeater by using the network configuration parameter. It solves the problem that the related art provides the network configuration parameter of the repeater to the unmanned aerial vehicle with the help of a PC, all the operations need to be accomplished manually by the user, the operation is inconvenient, and the efficiency is relatively low. The present embodiment achieves providing the network configuration parameter by using the existing first communication link between the mobile terminal and the target equipment, and the whole process is accomplished without user intervention, thus achieving the technical effect of simplifying the operation and improving the efficiency.

Fig. 3 is a flow chart illustrating another component part of the method for establishing a wireless network connection according to an example embodiment. This component part of the method may be applied in the target equipment 130 in the implementing environment as shown in Fig. 1. This component part of the method may include the following several steps.

In step 301, a network configuration parameter of a repeater sent by a mobile terminal is received through a first communication link established between the target equipment and a mobile terminal.

In step 302, a first wireless network connection is established with the repeater by using the network configuration parameter.

Consequently, in the method provided by the present embodiment, the target equipment receives a network configuration parameter of a repeater sent by a mobile terminal through a first communication link established between the target equipment and a mobile terminal; and then the target equipment establishes a first wireless network connection with the repeater by using the network configuration parameter. It solves the problem that the related art provides the network configuration parameter of the repeater to the unmanned aerial vehicle with the help of a PC, all the operations need to be accomplished manually by the user, the operation is inconvenient, and the efficiency is relatively low. The present embodiment achieves providing the network configuration parameter by using the existing first communication link between the mobile terminal and the target equipment, and the whole process is accomplished without user intervention, thus achieving the technical effect of simplifying the operation and improving the efficiency.

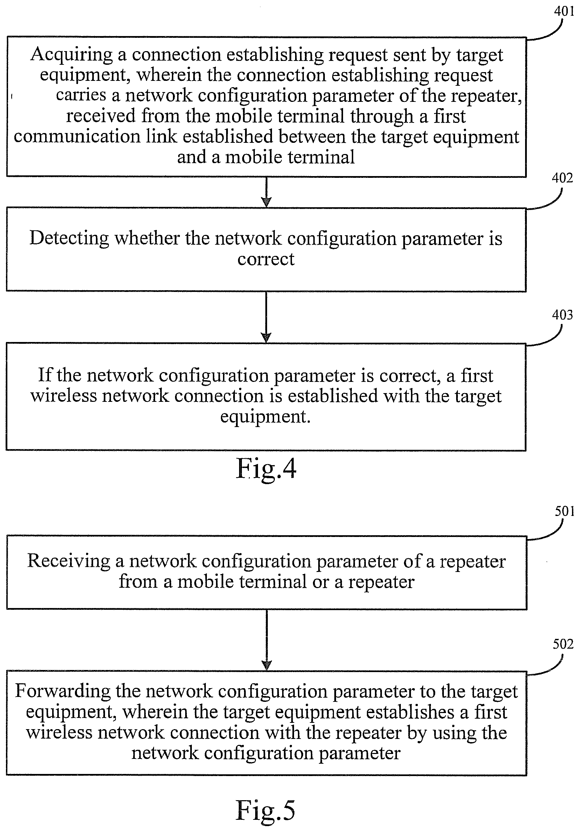

Fig. 4 is a flow chart illustrating yet another component part of the method for establishing a wireless network connection according to an example embodiment. This component part of the method may be applied in the repeater 120 in the implementing environment as shown in Fig. 1. This component part of the method may include the following several steps.

In step 401, a connection establishing request sent by target equipment is acquired, wherein the connection establishing request carries a network configuration parameter of the repeater, received from the mobile terminal through a first communication link established between the target equipment and a mobile terminal.

In step 402, it is detected whether the network configuration parameter is correct.

In step 403, if the network configuration parameter is correct, a first wireless network connection is established with the target equipment.

Consequently, in the method provided by the present embodiment, the repeater acquires a connection establishing request sent by target equipment, and establishes a first wireless network connection with the target equipment when it is detected that the network configuration parameter carried in the connection establishing request is correct. It solves the problem that the related art provides the network configuration parameter of the repeater to the unmanned aerial vehicle with the help of a PC, all the operations need to be accomplished manually by the user, the operation is inconvenient, and the efficiency is relatively low. The present embodiment achieves providing the network configuration parameter by using the existing first communication link between the mobile terminal and the target equipment, and the whole process is accomplished without user intervention, thus achieving the technical effect of simplifying the operation and improving the efficiency.

Fig. 5 is a flow chart illustrating still another component part of the method for establishing a wireless network connection according to an example embodiment. This component part of the method may be applied in the remote controller 140 in the implementing environment as shown in Fig. 1. This component part of the method may include the following several steps.

In step 501, a network configuration parameter of a repeater is received from a mobile terminal or a repeater.

In step 502, the network configuration parameter is forwarded to the target equipment, wherein the target equipment establishes a first wireless network connection with the repeater by using the network configuration parameter.

Consequently, in the method provided by the present embodiment, the remote controller receives a network configuration parameter from a mobile terminal or a repeater, and forwards the network configuration parameter to the target equipment, such that the target equipment establishes a first wireless network connection with the repeater by using the network configuration parameter. It solves the problem that the related art provides the network configuration parameter of the repeater to the unmanned aerial vehicle with the help of a PC, all the operations need to be accomplished manually by the user, the operation is inconvenient, and the efficiency is relatively low. The present embodiment achieves providing the network configuration parameter by using the existing first communication link between the mobile terminal and the target equipment, and the whole process is accomplished without user intervention, thus achieving the technical effect of simplifying the operation and improving the efficiency.

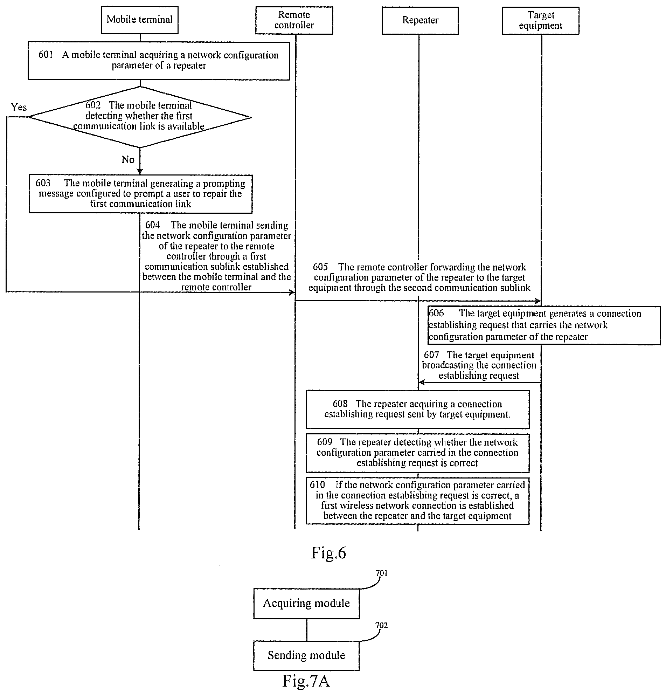

Fig. 6 is a flow chart illustrating a method for establishing a wireless network connection according to an example embodiment. The present embodiment is illustrated by taking an example that the method is applied in the implementing environment as shown in Fig. 1. The method may include the following several steps.

In step 601, a mobile terminal acquires a network configuration parameter of a repeater.

The network configuration parameter of the repeater includes, but not limited to: access authentication messages. The access authentication messages mean the authentication messages needed to establish wireless network connection with the repeater, for example, the access authentication messages include a SSID and a corresponding password. Certainly, in other possible implementations, the network configuration parameter of the repeater may also include a power configuration parameter of the repeater, a configuration parameter of a communication channel, a configuration parameter of a communication frequency band, or the like.

In the present embodiment, for example, the mobile terminal automatically may generate the network configuration parameter of the repeater. The mobile terminal may automatically generate the network configuration parameter of the repeater by a designated application program. For example, the network configuration parameter includes a SSID and a corresponding password, the mobile terminal may randomly generate the SSID and corresponding password by the designated application program. For example, the mobile terminal may automatically generate the network configuration parameter of the repeater every predetermined time interval. Wherein the adjacent two predetermined time intervals may be the same, or may be different. The predetermined time interval may be preset by the designated application program, and may also be set by a user definition. For example, one certain predetermined time interval may be set as 12 hours. For another example, the mobile terminal may also automatically generate the network configuration parameter of the repeater every time when detecting that the target equipment starts operation.

Furthermore, in the embodiment of the present disclosure, a first communication link is established between the mobile terminal and the target equipment. In one possible implementation, the first communication link may be established by a direct connection way. For example, the mobile terminal may directly establish the first communication link with the target equipment by radio, Bluetooth, or infrared ray and the like. In another possible implementation, the mobile terminal establishes the first communication link with the target equipment by transit equipment. Combining with the implementing environment as shown in Fig. 1, when the target equipment is the remote controlled equipment such as the unmanned aerial vehicle and the like, it is usually equipped with a corresponding remote controller. Therefore, the mobile terminal may establish the first communication link with the target equipment via the remote controller. Correspondingly, the first communication link may include: a first communication sublink between the mobile terminal and a remote controller, and a second communication sublink between the remote controller and the target equipment. Wherein the first communication sublink may adopt a wired connection way. For example, the mobile terminal may establish the first communication sublink with the remote controller by a cable configured to transmit data. The cable may be a USB (Universal Serial Bus) data line. Alternatively, the first communication sublink may also adopt a wireless connection way. For example, the mobile terminal may establish the second communication sublink with the remote controller by Bluetooth, ZigBee, NFC (Near Field Communication), radio frequency or infrared ray and the like. The second communication sublink between the remote controller and the target equipment usually adopts the radio way. For example, the remote controller sends the data to the target equipment by the radio signal of 2.4GHz.

In the embodiment of the present disclosure, the mobile terminal provides the network configuration parameter of the repeater to the target equipment by using the existing first communication link between the mobile terminal and the target equipment. For example, the mobile terminal firstly performs a following step 602 before sending the network configuration parameter of the repeater to the target equipment through the first communication link.

In step 602, the mobile terminal detects whether the first communication link is available.

The mobile terminal detects whether the first communication link is available, to ensure that the network configuration parameter of the repeater may be successfully sent to the target equipment subsequently.

Under the situation where the mobile terminal establishes the first communication link with the target equipment via the remote controller, the mobile terminal may detect whether the first communication sublink and the second communication sublink are available respectively. Wherein the mobile terminal may detect whether the first communication sublink is available by the following way: the mobile terminal sends a first testing signal to the remote controller via the first communication sublink; if the mobile terminal receives a response corresponding to the first testing signal fed back by the remote controller, the mobile terminal determines that the first communication sublink is available; otherwise, if the mobile terminal does not receive a response corresponding to the first testing signal fed back by the remote controller, the mobile terminal determines that the first communication sublink is not available. Furthermore, the mobile terminal may detect whether the second communication sublink is available by the following way: the mobile terminal receives an indicating message from the remote controller via the first communication sublink, wherein the indicating message is configured to indicate whether the second communication sublink is available. The remote controller may send a second testing signal to the target equipment by the second communication sublink; if the remote controller receives a response corresponding to the second testing signal fed back by the target equipment, the remote controller determines that the second communication sublink is available, generates and feeds back to the mobile terminal the indicating message configured to indicate that the second communication sublink is available; otherwise, if the remote controller does not receive a response corresponding to the second testing signal fed back by the target equipment, the remote controller determines that the second communication sublink is not available, generates and feeds back to the mobile terminal the indicating message configured to indicate that the second communication sublink is not available. In practical application, the mobile terminal may only detect whether the first communication sublink is available, or may only detect whether the second communication sublink is available, or the mobile terminal may not only detect whether the first communication sublink is available but also detect whether the second communication sublink is available. The present embodiment is not limited thereto.

Certainly, when the first communication link is established by using the direct connection way, the mobile terminal may send a third testing signal to the target equipment through the first communication link, and determine whether the first communication link is available based on whether a response corresponding to the third testing signal fed back by the target equipment is received.

If the mobile terminal detects that the first communication link is not available, a following step 603 is performed. If the mobile terminal detects that the first communication link is available, a following step 604 is performed.

In step 603, the mobile terminal generates a prompting message configured to prompt a user to repair the first communication link.

Under the situation where the mobile terminal establishes the first communication link with the target equipment via the remote controller, if the first communication sublink in the first communication link is not available, the mobile terminal generates a prompting message configured to prompt a user to repair the first communication sublink; if the second communication sublink in the first communication link is not available, the mobile terminal generates a prompting message configured to prompt a user to repair the second communication sublink. By the above way, the mobile terminal may accurately prompt the user the communication link where a fault occurs, so that the user may locate and repair the fault more efficiently.

When the first communication link is established by using the direct connection way, if the first communication link is not available, the mobile terminal generates a prompting message configured to prompt a user to repair the first communication link.

In step 604, the mobile terminal sends the network configuration parameter of the repeater to the remote controller through a first communication sublink established between the mobile terminal and the remote controller.

Correspondingly, the remote controller receives the network configuration parameter of the repeater from the mobile terminal through a first communication sublink established between the remote controller and the mobile terminal.

In step 605, the remote controller forwards the network configuration parameter of the repeater to the target equipment through the second communication sublink.

Correspondingly, the target equipment receives the network configuration parameter of the repeater from the remote controller through the second communication sublink.

It should be noted that, the above step 604 and step 605 is only an example where the mobile terminal establishes the first communication link with the target equipment via the remote controller and the remote controller forwards the network configuration parameter of the repeater. In other possible implementations, the remote controller may be replaced by other types of transit equipment. Alternatively, when the first communication link is established by using the direct connection way, the mobile terminal directly sends the network configuration parameter of the repeater to the target equipment through the first communication link.

Furthermore, in the present embodiment, because the network configuration parameter of the repeater is generated by the mobile terminal, the mobile terminal further needs to provide the network configuration parameter to the repeater. In one possible implementation, the remote controller further forwards the network configuration parameter to the repeater after receiving the network configuration parameter of the repeater. Wherein, the wired connection way (for example, serial port connection), or the wireless connection way may be adopted between the remote controller and the repeater. In another possible implementation, the mobile terminal sends the network configuration parameter to the repeater through the second wireless network connection established between the mobile terminal and the repeater.

In step 606, the target equipment generates a connection establishing request carrying the network configuration parameter of the repeater.

In step 607, the target equipment broadcasts the connection establishing request.

The target equipment generates and broadcasts the connection establishing request after receiving the network configuration parameter of the repeater. The connection establishing request carries the network configuration parameter of the repeater.

In step 608, the repeater acquires the connection establishing request sent by target equipment.

In step 609, the repeater detects whether the network configuration parameter carried in the connection establishing request is correct.

In step 610, if the network configuration parameter carried in the connection establishing request is correct, a first wireless network connection is established between the repeater and the target equipment.

The repeater detects whether the network configuration parameter carried in the connection establishing request is correct after monitoring and acquiring the connection establishing request broadcast by the target equipment. When the detecting result is correct, the first wireless network connection is established with the target equipment.

Furthermore, for the sake of data security or network conflict, the network configuration parameter of the repeater needs to be modified according to actual requirement, to achieve the aim of improving data security or avoiding network conflict. Taking the target equipment being the unmanned aerial vehicle as an example, if the connection of the repeater is not encrypted or the password is too simple, mobile terminals of other users can access the repeater, which will cause that the mobile terminals of other users can also acquire the data (such as images) transmitted back by the unmanned aerial vehicle. Besides, when there are a plurality of unmanned aerial vehicles flying in a certain area, if SSIDs of two repeaters are the same, it will cause that the unmanned aerial vehicle and the mobile terminal cannot accurately distinguish the repeater needing to be connected to, generating connection disorder. Therefore, in order to avoid generating the above problem, the network configuration parameter of the repeater may be modified according to actual situations. After generating the updated network configuration parameter of the repeater, the mobile terminal still adopts the ways introduced above to provide the updated network configuration parameter to the target equipment and the repeater, such that the target equipment reestablishes the first wireless network connection with the repeater by using the updated network configuration parameter. By the above ways, it achieves the aim to automatically update the network configuration parameter of the repeater anytime and anywhere to improve data security or avoid network conflict, on the premise of not affecting normal flight of the target equipment (for example, normal flight of the unmanned aerial vehicle).

Consequently, in the method provided by the present embodiment, the mobile terminal acquires a network configuration parameter of a repeater and then sends the network configuration parameter to target equipment through a first communication link established between the mobile terminal and the target equipment, such that the target equipment establishes a first wireless network connection with the repeater by using the network configuration parameter. It solves the problem that the related art provides the network configuration parameter of the repeater to the unmanned aerial vehicle with the help of a PC, all the operations need to be accomplished manually by the user, the operation is inconvenient, and the efficiency is relatively low. The present embodiment achieves providing the network configuration parameter by using the existing first communication link between the mobile terminal and the target equipment, and the whole process is accomplished without user intervention, thus achieving the technical effect of simplifying the operation and improving the efficiency.

Furthermore, the mobile terminal automatically generates the network configuration parameter of the repeater and sends the network configuration parameter to the target equipment via the remote controller, and the existing communication link in the whole system is fully used. Besides, it achieves the aim to automatically update the network configuration parameter of the repeater anytime and anywhere to improve data security or avoid network conflict, on the premise of not affecting normal flight of the target equipment (for example, normal flight of the unmanned aerial vehicle).

Furthermore, before sending the network configuration parameter of the repeater to the target equipment through the first communication link, the mobile terminal detects whether the first communication link is available, to ensure that the network configuration parameter of the repeater may be successfully sent to the target equipment subsequently.

It should be noted that, in the above embodiment as shown in the Fig. 6, the mobile terminal automatically generates the network configuration parameter of the repeater. In other possible implementations, the network configuration parameter may also be automatically generated by the repeater. Correspondingly, the mobile terminal receives the network configuration parameter automatically generated by the repeater from the repeater through the second wireless network connection. Thereafter, the mobile terminal sends the network configuration parameter of the repeater to the target equipment through the first communication link. In another possible implementation, the repeater may establish communication connection with the remote controller by ways such as a serial port. After generating the network configuration parameter of the repeater, the repeater directly sends the network configuration parameter to the remote controller, and the remote controller forwards the network configuration parameter to the target equipment. Certainly, in other possible implementations, the mobile terminal may also display a configuration interface of the network configuration parameter of the repeater, and acquire the network configuration parameter in the configuration interface input and configured from the user.

It should be noted that, in the above embodiment as shown in the Fig. 6, the steps related to the mobile terminal side may be separately implemented as a method for establishing a wireless network connection at the mobile terminal side, the steps related to the target equipment side may be separately implemented as a method for establishing a wireless network connection at the target equipment side, the steps related to the repeater side may be separately implemented as a method for establishing a wireless network connection at the repeater side, and the steps related to the remote controller side may be separately implemented as a method for establishing a wireless network connection at the remote controller side.

Furthermore, it has been introduced above that, in one possible implementation, the target equipment is the external equipment of the unmanned aerial vehicle. When the target equipment is the external equipment of the unmanned aerial vehicle, the external equipment of the unmanned aerial vehicle is connected with a control component of the unmanned aerial vehicle through a data bus. After receiving the network configuration parameter of the repeater from the remote controller, the control component of the unmanned aerial vehicle provides the network configuration parameter to the external equipment of the unmanned aerial vehicle through the data bus; thereafter, the external equipment of the unmanned aerial vehicle establishes the first wireless network connection with the repeater by using the network configuration parameter. The external equipment of the unmanned aerial vehicle may only include an image collecting component, or it may only include a flight parameter detecting component, or it may include both the image collecting component and flight parameter detecting component at the same time. Certainly, in other possible implementations, the external equipment of the unmanned aerial vehicle may be designed as other functional components according to actual requirement. The embodiment of the present disclosure is not limited thereto.

When the target equipment is the external equipment of the unmanned aerial vehicle, before sending the network configuration parameter of the repeater to the target equipment through the first communication link, the mobile terminal may further detect the connection between the external equipment of the unmanned aerial vehicle and the control component of the unmanned aerial vehicle is available, to ensure that the network configuration parameter of the repeater may be successfully sent to the external equipment of the unmanned aerial vehicle subsequently. For example, the control component of the unmanned aerial vehicle detects whether the connection between the control component and the external equipment is available, and feeds back the detecting result to the mobile terminal. If the mobile terminal receives a detecting result indicating that the above connection is not available, a prompting message configured to prompt the user to repair the connection between the external equipment of the unmanned aerial vehicle and the control component of the unmanned aerial vehicle is generated. If the mobile terminal receives a detecting result indicating that the above connection is available, and the first communication link between the mobile terminal and the control component of the unmanned aerial vehicle is also available, the mobile terminal sends the network configuration parameter of the repeater to the control component of the unmanned aerial vehicle through the first communication link, and the control component provides the network configuration parameter to the external equipment of the unmanned aerial vehicle through the data bus, such that the external equipment of the unmanned aerial vehicle establishes the first wireless network connection with the repeater by using the network configuration parameter.

In the following embodiments of devices used in a system according to the present disclosure, the devices may be configured to perform the method in the above embodiments of the present disclosure. Details not disclosed in the description of device embodiments may be understood by referring to the description of method embodiments.

Fig. 7A is a block diagram of a device that may be used in a system for establishing a wireless network connection according to an example embodiment. The device may constitute a part or all of the mobile terminal by software, hardware or a combination thereof. The device may include: an acquiring module 701 and a sending module 702.

The acquiring module 701 is configured to acquire a network configuration parameter of a repeater.

The sending module 702 is configured to send the network configuration parameter acquired by the acquiring module 701 to target equipment through a first communication link established between the mobile terminal and the target equipment, wherein the target equipment establishes a first wireless network connection with the repeater by using the network configuration parameter.

Consequently, in the device provided by the present embodiment, the mobile terminal acquires a network configuration parameter of a repeater and then sends the network configuration parameter to target equipment through a first communication link established between the mobile terminal and the target equipment, such that the target equipment establishes a first wireless network connection with the repeater by using the network configuration parameter. It solves the problem that the related art provides the network configuration parameter of the repeater to the unmanned aerial vehicle with the help of a PC, all the operations need to be accomplished manually by the user, the operation is inconvenient, and the efficiency is relatively low. The present embodiment achieves providing the network configuration parameter by using the existing first communication link between the mobile terminal and the target equipment, and the whole process is accomplished without user intervention, thus achieving the technical effect of simplifying the operation and improving the efficiency.

In an implementation based on the embodiment as shown in Fig. 7A, the first communication link includes: a first communication sublink between the mobile terminal and a remote controller, and a second communication sublink between the remote controller and the target equipment.

In this implementation the sending module 702 is configured to send the network configuration parameter acquired by the acquiring module 701 to the remote controller through the first communication sublink.

Wherein the remote controller is configured to forward the network configuration parameter to the target equipment through the second communication sublink.

For example, the first communication sublink adopts a wired connection way; alternatively, the first communication sublink adopts a wireless connection way.

In an optional embodiment provided based on the embodiment as shown in Fig. 7A, the acquiring module 701 is further configured to: automatically generate the network configuration parameter of the repeater; alternatively, receive the network configuration parameter automatically generated by the repeater from the repeater through the second wireless network connection established between the mobile terminal and the repeater.

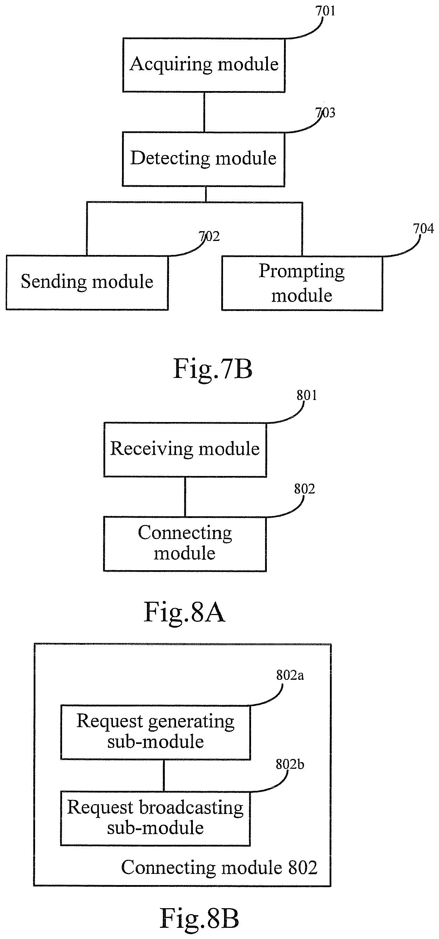

In another optional embodiment provided based on the embodiment as shown in Fig. 7A, as shown in Fig. 7B, the device further includes: a detecting module 703 and a prompting module 704.

The detecting module 703 is configured to detect whether the first communication link is available.

The sending module 702 is configured to, if the detecting module 703 detects that the first communication link is available, send the network configuration parameter to target equipment through a first communication link established between the mobile terminal and the target equipment.

The prompting module 704 is configured to, if the detecting module 703 detects that the first communication link is not available, generate a prompting message configured to prompt a user to repair the first communication link.

For example, the detecting module 703 is configured to: detect whether the first communication sublink is available; and/or, receive an indicating message from the remote controller through the first communication sublink, wherein the indicating message is configured to indicate whether the second communication sublink is available.

In another optional embodiment provided based on the embodiment as shown in Fig. 7A, the target equipment is external equipment of an unmanned aerial vehicle.

For example, the external equipment is connected with a control component of the unmanned aerial vehicle through a data bus; the first communication link is established between the control component and the mobile terminal; and a second wireless network connection is further established between the repeater and the mobile terminal, and the first wireless network connection and the second wireless network connection form a second communication link between the external equipment and the mobile terminal.

For example, the external equipment includes: an image collecting component and/or a flight parameter detecting component.

Fig. 8A is a block diagram of another device that may be used in a system for establishing a wireless network connection according to another example embodiment. The device may constitute a part or all of the target equipment by software, hardware or a combination thereof. The device may include: a receiving module 801 and a connecting module 802.

The receiving module 801 is configured to receive a network configuration parameter of a repeater sent by a mobile terminal through a first communication link established between the target equipment and a mobile terminal.

The connecting module 802 is configured to establish a first wireless network connection with the repeater by using the network configuration parameter received by the receiving module 801.

Consequently, in the device provided by the present embodiment, the target equipment receives a network configuration parameter of a repeater sent by a mobile terminal through a first communication link established between the target equipment and a mobile terminal; and then the target equipment establishes a first wireless network connection with the repeater by using the network configuration parameter. It solves the problem that the related art provides the network configuration parameter of the repeater to the unmanned aerial vehicle with the help of a PC, all the operations need to be accomplished manually by the user, the operation is inconvenient, and the efficiency is relatively low. The present disclosure achieves providing the network configuration parameter by using the existing first communication link between the mobile terminal and the target equipment, and the whole process is accomplished without user intervention, thus achieving the technical effect of simplifying the operation and improving the efficiency.

In an implementation provided based on the embodiment as shown in Fig. 8A, the first communication link includes: a first communication sublink between the mobile terminal and a remote controller, and a second communication sublink between the remote controller and the target equipment.

Correspondingly, the receiving module 801 is further configured to: receive the network configuration parameter of the repeater from the remote controller through the second communication sublink. Wherein the mobile terminal sends the network configuration parameter to the remote controller through the first communication sublink.

In an optional embodiment provided based on the embodiment as shown in Fig. 8A, as shown in Fig. 8B, the connecting module 802 includes a request generating sub-module 802a and a request broadcasting sub-module 802b.

The request generating sub-module 802a is configured to generate a connection establishing request carrying the network configuration parameter received by the receiving module 801.

The request broadcasting sub-module 802b is configured to broadcast the connection establishing request generated by the request generating sub-module 802a, such that after acquiring the connection establishing request, the repeater establishes the first wireless connection with the target equipment when it is detected that the network configuration parameter is correct.

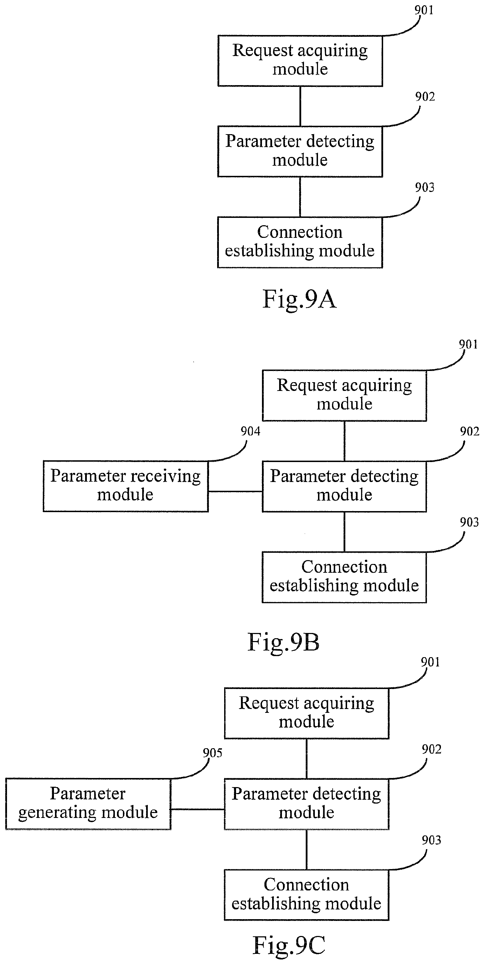

Fig. 9A is a block diagram of yet another device that may be used in a system for establishing a wireless network connection according to another example embodiment. The device may constitute a part or all of the repeater by software, hardware or a combination thereof. The device may include: a request acquiring module 901, a parameter detecting module 902 and a connection establishing module 903.

The request acquiring module 901 is configured to acquire a connection establishing request sent by target equipment, wherein the connection establishing request carries a network configuration parameter of the repeater, received from the mobile terminal through a first communication link established between the target equipment and a mobile terminal.

The parameter detecting module 902 is configured to detect whether the network configuration parameter acquired by the request acquiring module 901 is correct.

The connection establishing module 903 is configured to, if the parameter detecting module 902 detects that the network configuration parameter is correct, establish a first wireless network connection with the target equipment.

Consequently, in the device provided by the present embodiment, the repeater acquires a connection establishing request sent by target equipment, and establishes a first wireless network connection with the target equipment when it is detected that the network configuration parameter carried in the connection establishing request is correct. It solves the problem that the related art provides the network configuration parameter of the repeater to the unmanned aerial vehicle with the help of a PC, all the operations need to be accomplished manually by the user, the operation is inconvenient, and the efficiency is relatively low. The present disclosure achieves providing the network configuration parameter by using the existing first communication link between the mobile terminal and the target equipment, and the whole process is accomplished without user intervention, thus achieving the technical effect of simplifying the operation and improving the efficiency.

In an optional embodiment provided based on the embodiment as shown in Fig. 9A, as shown in Fig. 9B/9C, the device further includes: a parameter receiving module 904 or a parameter generating module 905.

The parameter receiving module 904 is configured to receive the network configuration parameter of the repeater automatically generated by the mobile terminal, from the mobile terminal through a second wireless network connection established between the repeater and the mobile terminal.

The parameter generating module 905 is configured to automatically generate the network configuration parameter of the repeater.

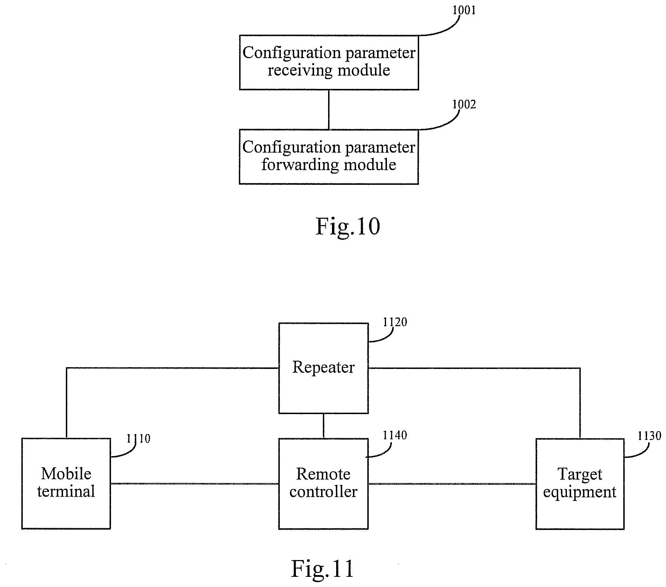

Fig. 10 is a block diagram of still another device that may be used in a system for establishing a wireless network connection according to another example embodiment. The device may constitute a part or all of the remote controller by software, hardware or a combination thereof. The device may include: a configuration parameter receiving module 1001 and a configuration parameter forwarding module 1002.

The configuration parameter receiving module 1001 is configured to receive the network configuration parameter of the repeater from the mobile terminal or the repeater.

The configuration parameter forwarding module 1002 is configured to forward the network configuration parameter received by the configuration parameter receiving module 1001 to the target equipment, wherein the target equipment establishes a first wireless network connection with the repeater by using the network configuration parameter.

Consequently, in the device provided by the present embodiment, the remote controller receives a network configuration parameter from a mobile terminal or a repeater, and forwards the network configuration parameter to the target equipment, such that the target equipment establishes a first wireless network connection with the repeater by using the network configuration parameter. It solves the problem that the related art provides the network configuration parameter of the repeater to the unmanned aerial vehicle with the help of a PC, all the operations need to be accomplished manually by the user, the operation is inconvenient, and the efficiency is relatively low. The present disclosure achieves providing the network configuration parameter by using the existing first communication link between the mobile terminal and the target equipment, and the whole process is accomplished without user intervention, thus achieving the technical effect of simplifying the operation and improving the efficiency.

It should be noted that, in the above description, the device provided by the above-described embodiments is only illustrated in terms of certain combinations of functional modules. In practice, the above functions may be performed by different modules as desired, that is, the internal structure of the device may be divided into different functional modules (e.g. plural described modules may be integrated into a common module, the functions of a single described module may be distributed over plural modules, etc.), so as to achieve all or a part of the functions described above. The functional modules may be implemented in software, in application-specific or general hardware, or in any convenient combination thereof.

With respect to the device embodiments, the specific manner for performing operations for individual modules therein has already been described in detail in the method embodiments, and so will not be further elaborated herein.

Fig. 11 is a block diagram of a system for establishing a wireless network connection according to an example embodiment. The system includes: a mobile terminal 1110, a repeater 1120 and target equipment 1130.

The mobile terminal 1110 is configured to acquire a network configuration parameter of a repeater 1120.

The mobile terminal 1110 is further configured to send the network configuration parameter to the target equipment 1130 through a first communication link established between the mobile terminal 1110 and the target equipment 1130.

The target equipment 1130 is further configured to establish a first wireless network connection with the repeater 1120 by using the network configuration parameter.

For example, as shown in Fig. 11, the system may further include: a remote controller 1140. Correspondingly, the first communication link may include: a first communication sublink between the mobile terminal 1110 and a remote controller 1140, and a second communication sublink between the remote controller 1140 and the target equipment 1130.

In this example the mobile terminal 1110 is configured to send the network configuration parameter to the remote controller 1140 through the first communication sublink.

In this example the remote controller 1140 is configured to forward the network configuration parameter to the target equipment 1130 through the second communication sublink.

One example embodiment of the present disclosure further provides a device for establishing a wireless network connection, which can implement the method for establishing a wireless network connection at the mobile terminal side provided by the embodiment of the present disclosure. The device includes: a processor; and a memory for storing instructions executable by the processor.

Wherein the processor is configured to perform:
acquiring a network configuration parameter of a repeater; and
sending the network configuration parameter to target equipment through a first communication link established between the mobile terminal and the target equipment, wherein the target equipment establishes a first wireless network connection with the repeater by using the network configuration parameter.

For example, the first communication link may include: a first communication sublink between the mobile terminal and a remote controller, and a second communication sublink between the remote controller and the target equipment.

Correspondingly, the processor may be configured to: send the network configuration parameter to the remote controller through the first communication sublink.

Wherein the remote controller is configured to forward the network configuration parameter to the target equipment through the second communication sublink.

For example, the first communication sublink may be implemented using a wired connection; alternatively, the first communication sublink may be implemented using a wireless connection.

For example, the processor may be configured to:
automatically generate the network configuration parameter of the repeater; or
receive the network configuration parameter automatically generated by the repeater from the repeater through the second wireless network connection established between the mobile terminal and the repeater.

For example, the processor may be further configured to:
detect whether the first communication link is available;
if the first communication link is available, send the network configuration parameter to target equipment through a first communication link established between the mobile terminal and the target equipment; and
if the first communication link is not available, generating a prompting message configured to prompt a user to repair the first communication link.

For example, the first communication link may include: a first communication sublink between the mobile terminal and a remote controller, and a second communication sublink between the remote controller and the target equipment. The processor may be configured to:
detect whether the first communication sublink is available; and/or,
receive an indicating message from the remote controller through the first communication sublink, wherein the indicating message is configured to indicate whether the second communication sublink is available.

For example, the target equipment may be external equipment of an unmanned aerial vehicle.

Correspondingly, the external equipment may be connected with a control component of the unmanned aerial vehicle through a data bus; the first communication link is established between the control component and the mobile terminal; and a second wireless network connection is further established between the repeater and the mobile terminal, and the first wireless network connection and the second wireless network connection form a second communication link between the external equipment and the mobile terminal.

For example, the external equipment may include: an image collecting component and/or a flight parameter detecting component.

One example embodiment of the present disclosure further provides a device for establishing a wireless network connection, which can implement the method for establishing a wireless network connection at the target equipment side provided by the embodiment of the present disclosure. The device includes: a processor; and a memory for storing instructions executable by the processor.

Wherein the processor is configured to perform:
receiving a network configuration parameter of a repeater sent by a mobile terminal through a first communication link established between the target equipment and a mobile terminal; and
establishing a first wireless network connection with the repeater by using the network configuration parameter.

For example, the first communication link may include: a first communication sublink between the mobile terminal and a remote controller, and a second communication sublink between the remote controller and the target equipment.

Correspondingly, the processor may be configured to: receive the network configuration parameter of the repeater from the remote controller through the second communication sublink.

Wherein the mobile terminal sends the network configuration parameter to the remote controller through the first communication sublink.

For example, the processor may be configured to:
generate a connection establishing request carrying with the network configuration parameter; and
broadcast the connection establishing request, such that after acquiring the connection establishing request, the repeater establishes the first wireless connection with the target equipment when it is detected that the network configuration parameter is correct.

One example embodiment of the present disclosure further provides a device for establishing a wireless network connection, which can implement the method for establishing a wireless network connection at the repeater side provided by the embodiment of the present disclosure. The device includes: a processor; and a memory for storing instructions executable by the processor.

Wherein the processor is configured to perform:
acquiring a connection establishing request sent by target equipment, wherein the connection establishing request carries a network configuration parameter of the repeater, received from the mobile terminal through a first communication link established between the target equipment and a mobile terminal;
detecting whether the network configuration parameter is correct; and
if the network configuration parameter is correct, establishing a first wireless network connection with the target equipment.

For example, the processor may be further configured to:
receive the network configuration parameter of the repeater automatically generated by the mobile terminal from the mobile terminal through a second wireless network connection established between the repeater and the mobile terminal;
or,
automatically generate the network configuration parameter of the repeater.

One example embodiment of the present disclosure further provides a device for establishing a wireless network connection, which can implement the method for establishing a wireless network connection at the remote controller side provided by the embodiment of the present disclosure. The device includes: a processor; and a memory for storing instructions executable by the processor.

Wherein the processor is configured to perform:
receiving a network configuration parameter of a repeater from a mobile terminal or a repeater; and
forwarding the network configuration parameter to the target equipment, wherein the target equipment establishes a first wireless network connection with the repeater by using the network configuration parameter.

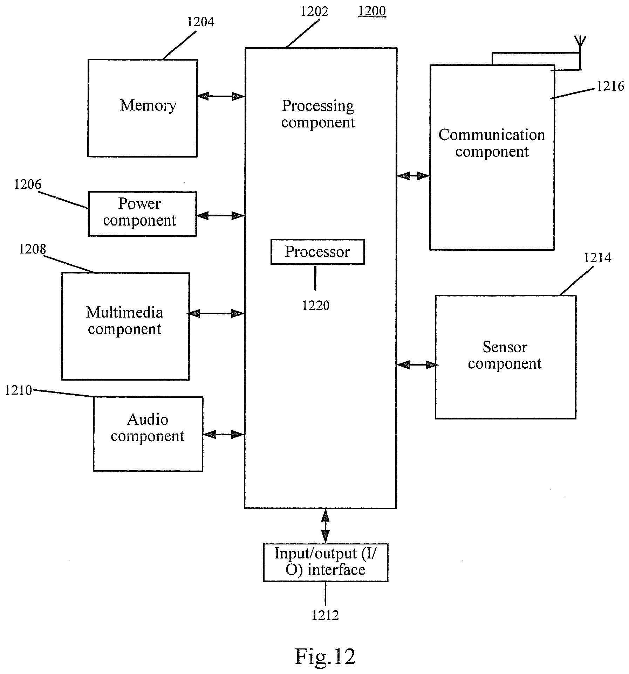

Fig. 12 is a block diagram of a device 1200 according to an example embodiment. The device 1200 may be the mobile terminal involved in the above embodiments. For example, the device 1200 may be a mobile phone, a computer, a digital broadcast terminal, a messaging device, a gaming console, a tablet, a medical device, exercise equipment, a personal digital assistant, and the like.

Referring to Fig. 12, the device 1200 may include one or more of the following components: a processing component 1202, a memory 1204, a power component 1206, a multimedia component 1208, an audio component 1210, an input/output (I/O) interface 1212, a sensor component 1214, and a communication component 1216.

The processing component 1202 typically controls overall operations of the device 1200, such as the operations associated with display, telephone calls, data communications, camera operations, and recording operations. The processing component 1202 may include one or more processors 1220 to execute instructions to perform all or part of the steps in the above described methods. Moreover, the processing component 1202 may include one or more modules which facilitate the interaction between the processing component 1202 and other components. For instance, the processing component 1202 may include a multimedia module to facilitate the interaction between the multimedia component 1208 and the processing component 1202.

The memory 1204 is configured to store various types of data to support the operation of the device 1200. Examples of such data include instructions for any applications or methods operated on the device 1200, contact data, phonebook data, messages, pictures, video, etc. The memory 1204 may be implemented by using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1206 provides power to various components of the device 1200. The power component 1206 may include a power management system, one or more power sources, and any other components associated with the generation, management, and distribution of power in the device 1200.

The multimedia component 1208 includes a screen providing an output interface between the device 1200 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1208 includes a front camera and/or a rear camera. The front camera and the rear camera may receive an external multimedia datum while the device 1200 is in an operation mode, such as a photographing mode or a video mode. Each of the front camera and the rear camera may be a fixed optical lens system or have focus and optical zoom capability.

The audio component 1210 is configured to output and/or input audio signals. For example, the audio component 1210 includes a microphone ("MIC") configured to receive an external audio signal when the device 1200 is in an operation mode, such as a call mode, a recording mode, and a voice recognition mode. The received audio signal may be further stored in the memory 1204 or transmitted via the communication component 1216. In some embodiments, the audio component 1210 further includes a speaker to output audio signals.

The I/O interface 1212 provides an interface between the processing component 1202 and peripheral interface modules, such as a keyboard, a click wheel, buttons, and the like. The buttons may include, but are not limited to, a home button, a volume button, a starting button, and a locking button.

The sensor component 1214 includes one or more sensors to provide status assessments of various aspects of the device 1200. For instance, the sensor component 1214 may detect an open/closed status of the device 1200, relative positioning of components, e.g., the display and the keypad, of the device 1200, a change in position of the device 1200 or a component of the device 1200, a presence or absence of user contact with the device 1200, an orientation or an acceleration/deceleration of the device 1200, and a change in temperature of the device 1200. The sensor component 1214 may include a proximity sensor configured to detect the presence of nearby objects without any physical contact. The sensor component 1214 may further include a light sensor, such as a CMOS or CCD image sensor, for use in imaging applications. In some embodiments, the sensor component 1214 may further include an accelerometer sensor, a gyroscope sensor, a magnetic sensor, a pressure sensor or a temperature sensor.

The communication component 1216 is configured to facilitate communication, wired or wirelessly, between the device 1200 and other devices. The device 1200 may access a wireless network based on a communication standard, such as WiFi, 2G, or 3G, or a combination thereof. In one example embodiment, the communication component 1216 receives a broadcast signal or broadcast associated information from an external broadcast management system via a broadcast channel. In one example embodiment, the communication component 1216 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In example embodiments, the device 1200 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described method at the mobile terminal side in the embodiment as shown in Fig. 2 or Fig. 6.

In example embodiments, there is further provided a non-transitory computer-readable storage medium including instructions, such as included in the memory 1204, executable by the processor 1220 in the device 1200, for performing the above method at the mobile terminal side in the embodiment as shown in Fig. 2 or Fig. 6. For example, the non-transitory computer-readable storage medium may be a ROM, a RAM, a CD-ROM, a magnetic tape, a floppy disc, an optical data storage device, and the like.

## Claims

1. A method for establishing a wireless network connection between a repeater and target equipment, comprising:
a mobile terminal acquiring (601) a network configuration parameter of said repeater;
the mobile terminal sending (604) the network configuration parameter to target equipment through a first communication link established between the mobile terminal and the target equipment, the first communication link comprising: a first communication sublink between the mobile terminal and a remote controller, and a second communication sublink between the remote controller and the target equipment; and the sending of the network configuration parameter to target equipment through a first communication link established between the mobile terminal and the target equipment includes: sending (604) the network configuration parameter to the remote controller through the first communication sublink, wherein the remote controller is configured to forward (605) the network configuration parameter to the target equipment through the second communication sublink; and
the target equipment establishing (610) a first wireless network connection with the repeater by using the network configuration parameter.

2. A system for establishing a wireless network connection between a repeater and target equipment, the system comprising:
a mobile terminal, a remote controller and said target equipment;
wherein the mobile terminal comprises:
an acquiring module (701) configured to acquire a network configuration parameter of said repeater; and
a sending module (702) configured to send the network configuration parameter to said target equipment through a first communication link established between the mobile terminal and the target equipment, the first communication link comprising: a first communication sublink between the mobile terminal and said remote controller, and a second communication sublink between the remote controller and the target equipment;
wherein the target equipment is configured to establish a first wireless network connection with the repeater by using the network configuration parameter received from the remote controller; and
wherein:
the sending module (702) is configured to send the network configuration parameter to the remote controller through the first communication sublink, and
the remote controller is configured to forward the network configuration parameter to the target equipment through the second communication sublink.

3. The system of claim 2, wherein the mobile terminal further comprises: a detecting module (703) and a prompting module (704), wherein
the detecting module (703) is configured to detect whether the first communication link is available;
the sending module (702) is configured to, if the first communication link is available, send the network configuration parameter to target equipment through a first communication link established between the mobile terminal and the target equipment; and
the prompting module (704) is configured to, if the first communication link is not available, generate a prompting message configured to prompt a user to repair the first communication link.

4. The system of claim 3, wherein
the detecting module (703) is configured to:
detect whether the first communication sublink is available;
and/or,
receive an indicating message from the remote controller through the first communication sublink, wherein the indicating message is configured to indicate whether the second communication sublink is available.

5. The system of any one of claims 2 to 4, wherein the target equipment is external equipment of an unmanned aerial vehicle;
the external equipment is connected with a control component of the unmanned aerial vehicle through a data bus;
the first communication link is established between the control component and the mobile terminal; and
a second wireless network connection is further established between the repeater and the mobile terminal, and the first wireless network connection and the second wireless network connection form a second communication link between the external equipment and the mobile terminal.

6. The system of claim 5, wherein the external equipment comprises:
an image collecting component and/or a flight parameter detecting component.

7. The system of any one of claims 2 to 6, wherein the target equipment comprises:
a receiving module (801) configured to receive a network configuration parameter of the repeater sent by the mobile terminal through the first communication link established between the target equipment and the mobile terminal; and
a connecting module (802) configured to establish said first wireless network connection with the repeater by using the network configuration parameter.

8. The system of claim 7, wherein the connecting module comprises: a request generating sub-module (802a) and a request broadcasting sub-module (802b);
the request generating sub-module (802a) is configured to generate a connection establishing request carrying the network configuration parameter; and
the request broadcasting sub-module (802b) is configured to broadcast the connection establishing request, such that after acquiring the connection establishing request, the repeater establishes the first wireless connection with the target equipment when it is detected that the network configuration parameter is correct.

9. The system according to any one of claims 2 to 8, wherein the repeater comprises:
a request acquiring module (901) configured to acquire a connection establishing request sent by the target equipment, wherein the connection establishing request carries a network configuration parameter of the repeater, received from the mobile terminal through the first communication link established between the target equipment and the mobile terminal;
a parameter detecting module (902) configured to detect whether the network configuration parameter is correct; and
a connection establishing module (903) configured to, if the network configuration parameter is correct, establish said first wireless network connection with the target equipment.

10. The system of claim 9, wherein the repeater further comprises:
a parameter receiving module (904) configured to receive the network configuration parameter of the repeater automatically generated by the mobile terminal from the mobile terminal through a second wireless network connection established between the repeater and the mobile terminal; or,
a parameter generating module (905) configured to automatically generate the network configuration parameter of the repeater.

## Patentansprüche

1. Verfahren zum Aufbauen einer drahtlosen Netzverbindung zwischen einem Repeater und einem Zielgerät, wobei:
ein mobiles Endgerät einen Netzkonfigurationsparameter des Repeaters erfasst (601),
das mobile Endgerät den Netzkonfigurationsparameter über eine erste Kommunikationsverbindung, die zwischen dem mobilen Endgerät und dem Zielgerät aufgebaut ist, an das Zielgerät sendet (604), wobei die erste Kommunikationsverbindung umfasst: eine erste Kommunikationsunterverbindung zwischen dem mobilen Endgerät und einer Fernsteuerung und eine zweite Kommunikationsunterverbindung zwischen der Fernsteuerung und dem Zielgerät, und
das Senden des Netzkonfigurationsparameters an das Zielgerät über eine erste Kommunikationsverbindung, die zwischen dem mobilen Endgerät und dem Zielgerät aufgebaut ist, umfasst: Senden (604) des Netzkonfigurationsparameters an die Fernsteuerung über die erste Kommunikationsunterverbindung, wobei die Fernsteuerung dazu konfiguriert ist, den Netzkonfigurationsparameter an das Zielgerät über die zweite Kommunikationsunterverbindung weiterzuleiten (605), und
das Zielgerät eine erste drahtlose Netzverbindung mit dem Repeater unter Verwendung des Netzkonfigurationsparameters aufbaut (610).

2. System zum Aufbauen einer drahtlosen Netzverbindung zwischen einem Repeater und einem Zielgerät, wobei das System umfasst:
ein mobiles Endgerät, eine Fernsteuerung und das besagte Zielgerät,
wobei das mobile Endgerät umfasst:
ein Erfassungsmodul (701), das zum Erfassen eines Netzkonfigurationsparameters des Repeaters konfiguriert ist, und
ein Sendemodul (702), das dazu konfiguriert ist, den Netzkonfigurationsparameter über eine erste Kommunikationsverbindung, die zwischen dem mobilen Endgerät und dem Zielgerät aufgebaut ist, an das Zielgerät zu senden, wobei die erste Kommunikationsverbindung umfasst: eine erste Kommunikationsunterverbindung zwischen dem mobilen Endgerät und der Fernsteuerung, und eine zweite Kommunikationsunterverbindung zwischen der Fernsteuerung und dem Zielgerät,
wobei das Zielgerät dazu konfiguriert ist, eine erste drahtlose Netzverbindung mit dem Repeater unter Verwendung des von der Fernsteuerung empfangenen Netzkonfigurationsparameters aufzubauen, und
wobei:
das Sendemodul (702) dazu konfiguriert ist, den Netzkonfigurationsparameter über die erste Kommunikationsunterverbindung an die Fernsteuerung zu senden, und
die Fernsteuerung dazu konfiguriert ist, den Netzkonfigurationsparameter über die zweite Kommunikationsunterverbindung an das Zielgerät weiterzuleiten.

3. System nach Anspruch 2, wobei das mobile Endgerät ferner umfasst: ein Ermittlungsmodul (703) und ein Aufforderungsmodul (704), wobei
das Ermittlungsmodul (703) dazu konfiguriert ist, zu ermitteln, ob die erste Kommunikationsverbindung verfügbar ist,
das Sendemodul (702) dazu konfiguriert ist, den Netzkonfigurationsparameter über eine erste Kommunikationsverbindung, die zwischen dem mobilen Endgerät und dem Zielgerät aufgebaut ist, an das Zielgerät zu senden, wenn die erste Kommunikationsverbindung verfügbar ist, und
das Aufforderungsmodul (704) dazu konfiguriert ist, eine Aufforderungsnachricht zu erzeugen, die dazu konfiguriert ist, einen Benutzer aufzufordern, die erste Kommunikationsverbindung zu reparieren, wenn die erste Kommunikationsverbindung nicht verfügbar ist.

4. System nach Anspruch 3, wobei
das Ermittlungsmodul (703) dazu konfiguriert ist,
zu ermitteln, ob die erste Kommunikationsunterverbindung verfügbar ist, und/oder,
eine anzeigende Nachricht von der Fernsteuerung über die erste Kommunikationsunterverbindung zu empfangen, wobei die anzeigende Nachricht dazu konfiguriert ist, anzuzeigen, ob die zweite Kommunikationsunterverbindung verfügbar ist.

5. System nach einem der Ansprüche 2 bis 4, wobei das Zielgerät ein externes Gerät eines unbemannten Luftfahrzeugs ist,
das externe Gerät über einen Datenbus mit einer Steuerungskomponente des unbemannten Luftfahrzeugs verbunden ist,
die erste Kommunikationsverbindung zwischen der Steuerungskomponente und dem mobilen Endgerät aufgebaut wird, und
eine zweite drahtlose Netzverbindung ferner zwischen dem Repeater und dem mobilen Endgerät aufgebaut wird, und die erste drahtlose Netzverbindung und die zweite drahtlose Netzverbindung eine zweite Kommunikationsverbindung zwischen dem externen Gerät und dem mobilen Endgerät bilden.

6. System nach Anspruch 5, wobei das externe Gerät umfasst:
eine Bildsammelkomponente und/oder eine Flugparameter-Ermittlungskomponente.

7. System nach einem der Ansprüche 2 bis 6, wobei das Zielgerät umfasst:
ein Empfangsmodul (801), das dazu konfiguriert ist, einen Netzkonfigurationsparameter des Repeaters zu empfangen, der von dem mobilen Endgerät über die erste Kommunikationsverbindung gesendet wird, die zwischen dem Zielgerät und dem mobilen Endgerät eingerichtet ist, und
ein Verbindungsmodul (802), das dazu konfiguriert ist, die erste drahtlose Netzverbindung mit dem Repeater unter Verwendung des Netzkonfigurationsparameters aufzubauen.

8. System nach Anspruch 7, wobei das Verbindungsmodul umfasst:
ein anforderungserzeugendes Untermodul (802a) und ein anforderungsübertragendes Untermodul (802b), wobei
das anforderungserzeugende Untermodul (802a) dazu konfiguriert ist, eine Verbindungsaufbauanforderung zu erzeugen, die den Netzkonfigurationsparameter trägt, und
das anforderungsübertragende Untermodul (802b) dazu konfiguriert ist, die Verbindungsaufbauanforderung zu senden, so dass der Repeater nach dem Erfassen der Verbindungsaufbauanforderung die erste drahtlose Verbindung mit dem Zielgerät aufbaut, wenn ermittelt wird, dass der Netzkonfigurationsparameter korrekt ist.

9. System nach einem der Ansprüche 2 bis 8, wobei der Repeater umfasst:
ein Anforderungserfassungsmodul (901), das dazu konfiguriert ist, eine von dem Zielgerät gesendete Verbindungsaufbauanforderung zu erfassen, wobei die Verbindungsaufbauanforderung einen Netzkonfigurationsparameter des Repeaters trägt, der von dem mobilen Endgerät über die zwischen dem Zielgerät und dem mobilen Endgerät aufgebaute erste Kommunikationsverbindung empfangen wird,
ein Parameterermittlungsmodul (902), das dazu konfiguriert ist, zu erkennen, ob der Netzkonfigurationsparameter korrekt ist, und
ein Verbindungsaufbaumodul (903), das dazu konfiguriert ist, die erste drahtlose Netzverbindung mit dem Zielgerät aufzubauen, wenn der Netzkonfigurationsparameter korrekt ist.

10. System nach Anspruch 14, wobei der Repeater ferner umfasst:
ein Parameterempfangsmodul (904), das dazu konfiguriert ist, den automatisch von dem mobilen Endgerät erzeugten Netzkonfigurationsparameter des Repeaters von dem mobilen Endgerät über eine zweite drahtlose Netzverbindung zu empfangen, die zwischen dem Repeater und dem mobilen Endgerät aufgebaut wurde, oder,
ein Parametererzeugungsmodul (905), das dazu konfiguriert ist, automatisch den Netzkonfigurationsparameter des Repeaters zu erzeugen.

## Revendications

1. Procédé pour établir une connexion de réseau sans fil entre un répéteur et un équipement cible, comprenant :
un terminal mobile acquérant (601) un paramètre de configuration de réseau dudit répéteur ;
le terminal mobile envoyant (604) le paramètre de configuration de réseau à un équipement cible par l'intermédiaire d'une première liaison de communication établie entre le terminal mobile et l'équipement cible, la première liaison de communication comprenant : une première sous-liaison de communication entre le terminal mobile et un dispositif de commande à distance, et une seconde sous-liaison de communication entre le dispositif de commande à distance et l'équipement cible ; et l'envoi du paramètre de configuration de réseau à un équipement cible par l'intermédiaire d'une première liaison de communication établie entre le terminal mobile et l'équipement cible inclut : l'envoi (604) du paramètre de configuration de réseau au dispositif de commande à distance par l'intermédiaire de la première sous-liaison de communication, dans lequel le dispositif de commande à distance est configuré pour transférer (605) le paramètre de configuration de réseau à l'équipement cible par l'intermédiaire de la seconde sous-liaison de communication ; et
l'équipement cible établissant (610) une première connexion de réseau sans fil avec le répéteur en utilisant le paramètre de configuration de réseau.

2. Système pour établir une connexion de réseau sans fil entre un répéteur et un équipement cible, le système comprenant :
un terminal mobile, un dispositif de commande à distance et ledit équipement cible ;
dans lequel le terminal mobile comprend :
un module d'acquisition (701) configuré pour acquérir un paramètre de configuration de réseau dudit répéteur ; et
un module d'envoi (702) configuré pour envoyer le paramètre de configuration de réseau audit équipement cible par l'intermédiaire d'une première liaison de communication établie entre le terminal mobile et l'équipement cible, la première liaison de communication comprenant : une première sous-liaison de communication entre le terminal mobile et ledit dispositif de commande à distance, et une seconde sous-liaison de communication entre le dispositif de commande à distance et l'équipement cible ;
dans lequel l'équipement cible est configuré pour établir une première connexion de réseau sans fil avec le répéteur en utilisant le paramètre de configuration de réseau reçu en provenance du dispositif de commande à distance ; et
dans lequel :
le module d'envoi (702) est configuré pour envoyer le paramètre de configuration de réseau au dispositif de commande à distance par l'intermédiaire de la première sous-liaison de communication, et
le dispositif de commande à distance est configuré pour transférer le paramètre de configuration de réseau à l'équipement cible par l'intermédiaire de la seconde sous-liaison de communication.

3. Système selon la revendication 2, dans lequel le terminal mobile comprend en outre : un module de détection (703) et un module d'invitation (704), dans lequel
le module de détection (703) est configuré pour détecter si la première liaison de communication est disponible ;
le module d'envoi (702) est configuré pour, si la première liaison de communication est disponible, envoyer le paramètre de configuration de réseau à un équipement cible par l'intermédiaire d'une première liaison de communication établie entre le terminal mobile et l'équipement cible ; et
le module d'invitation (704) est configuré pour, si la première liaison de communication n'est pas disponible, générer un message d'invitation configuré pour inviter un utilisateur à réparer la première liaison de communication.

4. Système selon la revendication 3, dans lequel le module de détection (703) est configuré pour :
détecter si la première sous-liaison de communication est disponible ;
et/ou,
recevoir un message d'indication en provenance du dispositif de commande à distance par l'intermédiaire de la première sous-liaison de communication, dans lequel le message d'indication est configuré pour indiquer si la seconde sous-liaison de communication est disponible.

5. Système selon l'une quelconque des revendications 2 à 4, dans lequel l'équipement cible est un équipement externe d'un véhicule aérien sans pilote ;
l'équipement externe est connecté avec un composant de commande du véhicule aérien sans pilote par l'intermédiaire d'un bus de données ;
la première liaison de communication est établie entre le composant de commande et le terminal mobile ; et
une seconde connexion de réseau sans fil est en outre établie entre le répéteur et le terminal mobile, et la première connexion de réseau sans fil et la seconde connexion de réseau sans fil forment une seconde liaison de communication entre l'équipement externe et le terminal mobile.

6. Système selon la revendication 5, dans lequel l'équipement externe comprend :
un composant de collecte d'image et/ou un composant de détection de paramètre de vol.

7. Système selon l'une quelconque des revendications 2 à 6, dans lequel l'équipement cible comprend :
un module de réception (801) configuré pour recevoir un paramètre de configuration de réseau du répéteur envoyé par le terminal mobile par l'intermédiaire de la première liaison de communication établie entre l'équipement cible et le terminal mobile ; et
un module de connexion (802) configuré pour établir ladite première connexion de réseau sans fil avec le répéteur en utilisant le paramètre de configuration de réseau.

8. Système selon la revendication 7, dans lequel le module de connexion comprend : un sous-module de génération de demande (802a) et un sous-module de diffusion de demande (802b) ;
le sous-module de génération de demande (802a) est configuré pour générer une demande d'établissement de connexion portant le paramètre de configuration de réseau ; et
le sous-module de diffusion de demande (802b) est configuré pour diffuser la demande d'établissement de connexion, de sorte qu'après l'acquisition de la demande d'établissement de connexion, le répéteur établisse la première connexion sans fil avec l'équipement cible lorsqu'il est détecté que le paramètre de configuration de réseau est correct.

9. Système selon l'une quelconque des revendications 2 à 8, dans lequel le répéteur comprend :
un module d'acquisition de demande (901) configuré pour acquérir une demande d'établissement de connexion envoyée par l'équipement cible, dans lequel la demande d'établissement de connexion porte un paramètre de configuration de réseau du répéteur, reçu en provenance du terminal mobile par l'intermédiaire de la première liaison de communication établie entre l'équipement cible et le terminal mobile ;
un module de détection de paramètre (902) configuré pour détecter si le paramètre de configuration de réseau est correct ; et
un module d'établissement de connexion (903) configuré pour, si le paramètre de configuration de réseau est correct, établir ladite première connexion de réseau sans fil avec l'équipement cible.

10. Système selon la revendication 9, dans lequel le répéteur comprend en outre :
un module de réception de paramètre (904) configuré pour recevoir le paramètre de configuration de réseau du répéteur généré automatiquement par le terminal mobile en provenance du terminal mobile par l'intermédiaire d'une seconde connexion de réseau sans fil établie entre le répéteur et le terminal mobile ; ou,
un module de génération de paramètre (905) configuré pour générer automatiquement le paramètre de configuration de réseau du répéteur.
